# FASCICULE DE BREVET EUROPEEN

(11) **EP 3 725 386 B1**
(45) Date de publication et mention de la délivrance du brevet: **05.01.2022**
(21) Numéro de dépôt: 20169446.0
(22) Date de dépôt: 14.04.2020
(51) Int. Cl.: B01D 3/00, B01D 3/20

(54) **DISPOSITIF DE SEPARATION D'UN FLUIDE DIPHASIQUE INTEGRE DANS UNE COLONNE DE SEPARATION GAZ/LIQUIDE**
VORRICHTUNG ZUR TRENNUNG VON EINEM ZWEI PHASENSTRÖM INTERGRIERT IN EINER TRENNKOLONNE ZUR TRENNUNG VON GAS UND FLÜSSIGKEITEN
SEPARATION DEVICE FOR A BIPHASE FLUID INTEGRATED IN A SEPARATION COLUMN FOR SEPARATION OF GAS AND LIQUID

(30) Priorité: 16.04.2019 FR 1904054
(43) Date de publication de la demande: 21.10.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CORDIER, Elia, 94503 CHAMPIGNY SUR MARNE (FR); CORREIA, Antony, 92220 BAGNEUX (FR); FAUCHER, Vincent, 94503 CHAMPIGNY SUR MARNE (FR); GRIGOLETTO, Philippe, 94503 CHAMPIGNY SUR MARNE (FR)
(74) Mandataire: Air Liquide

(56) Documents cités:
- DE-A1- 10 352 294
- US-A- 2 874 798
- US-A- 4 235 847
- US-A- 5 464 573

## Description

Le domaine de la présente invention concerne les colonnes de séparation gaz/liquide, et plus particulièrement les dispositifs de séparation d'un fluide diphasique destinés à collaborer avec de telles colonnes.

Les colonnes de séparation gaz/liquide sont connues depuis de nombreuses années et permettent par exemple de réaliser une séparation de différents éléments chimiques entrant dans la composition d'un fluide, par exemple par distillation.

Par exemple, ces colonnes peuvent être encapsulées dans des enceintes isolées appelées boîtes froides, c'est-à-dire des boîtes dans lesquelles la température est maintenue à des températures extrêmement basses, de l'ordre de -180°C, et comprennent parfois plusieurs ouvertures par lesquelles une phase liquide ou une phase gazeuse du fluide contenant les éléments à séparer peuvent être injectées. Alternativement les conduites d'amenée de fluides froids peuvent être entièrement contenues dans la boîte froide. Une fois injectées dans une telle colonne, la phase gazeuse remonte vers une partie supérieure de la colonne tandis que la phase liquide descend vers une partie inférieure de la colonne.

Autrement dit, la phase liquide et la phase gazeuse du fluide circulent dans ces colonnes selon deux sens opposés. Classiquement, les phases liquide et gazeuse du fluide sont introduites distinctement dans la colonne.

Ces colonnes comprennent en outre plusieurs organes de contact qui permettent de mettre en contact la phase liquide et la phase gazeuse du fluide contenant les éléments à séparer.

Entre deux organes de contact successifs, ces colonnes peuvent comprendre un collecteur qui collecte le liquide issu d'un premier organe de contact pour le diriger vers un dispositif de distribution qui est quant à lui configuré pour diriger le liquide vers un second organe de contact et le répartir de façon homogène sur ce deuxième organe de contact.

Dans le même temps, ce collecteur et ce dispositif de distribution sont aptes à laisser passer le gaz qui quitte le second organe de contact vers le premier organe de contact.

Tel que cela est par exemple décrit dans le document IPCOM000253197D, un ou plusieurs dispositifs de séparation permettant de séparer les phases liquide et gazeuse d'un fluide diphasique peuvent être associé(s) à de telles colonnes afin de permettre l'injection de l'une et/ou l'autre de ces phases liquide et gazeuse par les ouvertures ménagées à différentes hauteurs de la colonne. Tels que décrits dans ce document, ces dispositifs de séparation sont classiquement logés dans les boîtes froides dans lesquelles sont également logées les colonnes associées à ces dispositifs de séparation. Ainsi, le fluide diphasique est séparé en une phase liquide et une phase gazeuse en dehors de la colonne avant que ces deux phases ne soient ensuite injectées indépendamment l'une de l'autre dans cette colonne. Afin de maintenir ces boîtes froides à la température souhaitée, les parois de celles-ci renferment un matériau thermiquement isolant. Ces boîtes froides sont ainsi très coûteuses à produire et leurs constructeurs cherchent donc à réduire ces coûts de production, notamment en réduisant leurs dimensions.

La présente invention s'inscrit dans ce contexte en proposant une colonne de séparation liquide/gaz dans laquelle est intégré au moins un dispositif de séparation qui permet de séparer une phase liquide d'une phase gazeuse d'un fluide diphasique de sorte que la boîte froide contenant cette colonne de séparation liquide/gaz et ce dispositif de séparation présente des dimensions réduites par rapport à l'art antérieur.

DE10352294, US5464573 et US4235847 divulguent un orifice permettant l'arrivée d'un fluide directement dans une boîte de séparation. Ainsi la séparation du fluide dans le conduit n'est pas favorisée. De plus le conduit n'est pas positionné de sorte que le fluide est projeté sur la paroi externe.

US2874798 présente un conduit droit et long traversant une grande partie du diamètre de la colonne. Ce conduit comprend une pluralité de chambres de détente, ouvertes vers le dessus et le dessous, permettant de faire tomber un liquide dans un tube. Le liquide descend dans le tube est n'est pas projeté contre le paroi externe de la colonne.

Un objet de la présente invention concerne ainsi une colonne de séparation gaz/liquide selon la revendication 1. Ainsi, la présente invention permet avantageusement d'injecter le fluide diphasique contenant les éléments à séparer dans la colonne, et plus exactement entre le premier organe de contact et le dispositif de distribution sans que les phases gazeuse et liquide de ce fluide diphasique n'aient à être préalablement séparées.

Le conduit peut être droit ou sinon en forme de L, V ou T.

Selon une configuration avantageuse de la présente invention, le conduit s'étend au-delà de la paroi externe de la colonne, à l'intérieur d'une boîte froide dans laquelle est reçue la colonne et à l'extérieur de cette colonne. Autrement dit, selon cette configuration, le conduit traverse la paroi externe de la colonne par l'orifice d'injection.

Selon un exemple particulier de réalisation de la présente invention, la colonne comprend plusieurs dispositifs de séparation, chacun agencé dans l'espace interne de la colonne, entre un organe de contact et un dispositif de distribution. Le conduit du dispositif de séparation peut présenter un diamètre constant entre l'orifice d'injection du fluide diphasique et l'au moins une boîte de séparation. Ce diamètre peut être calculé de sorte que la vitesse de circulation du fluide diphasique soit suffisamment faible pour qu'une pré-séparation des phases liquide et gazeuse s'opère à l'intérieur du conduit, en amont de l'au moins une boîte de séparation. Cette pré-séparation des phases liquide et gazeuse du fluide diphasique permet de réduire les dimensions de l'au moins une boîte de séparation, ce qui est particulièrement avantageux eu égard aux contraintes de dimensionnement imposées par le coût de fabrication de telles colonnes. Avantageusement, toutes les branches du conduit s'inscrivent principalement dans un même plan. Par exemple, les deuxième et/ou troisième branches peuvent partiellement s'étendre dans l'une ou l'autre de ces boîtes de séparation.

Selon une caractéristique de l'invention, la colonne présente une section circulaire, les boîtes de séparation étant alors diamétralement opposées.

Selon l'invention, au moins une boîte de séparation comprend au moins un trou par lequel la phase gazeuse du fluide diphasique est apte à quitter la boîte de séparation concernée et au moins une lumière par laquelle la phase liquide du fluide diphasique est apte à quitter cette boîte de séparation, l'au moins un trou étant ménagé au voisinage d'une première extrémité verticale de la boîte de séparation et la lumière étant ménagée au voisinage d'une deuxième extrémité verticale de cette boîte de séparation, opposée à la première extrémité verticale. Avantageusement, la première extrémité verticale au voisinage de laquelle est ménagé l'au moins un trou est une extrémité verticale supérieure de la boîte de séparation concernée, c'est-à-dire une extrémité de cette boîte de séparation la plus proche du premier organe de contact lorsque celle-ci est positionnée dans la colonne, la deuxième extrémité verticale au voisinage de laquelle est ménagée l'au moins une lumière étant par conséquent une extrémité verticale inférieure de cette boîte de séparation, c'est-à-dire une extrémité de cette boîte de séparation la plus proche du dispositif de distribution lorsque celle-ci est positionnée dans la colonne.

Selon une caractéristique de la présente invention, l'au moins un trou est ménagé au-dessus d'une zone de jonction entre le conduit et l'au moins une boîte de séparation. Avantageusement, une pluralité de trous sont ménagés au-dessus de cette zone de jonction.

Selon un exemple de réalisation, chacun de ces trous présente une forme oblongue dont un axe d'extension principal est parallèle à l'axe vertical. Selon cette caractéristique de la présente invention, le fluide diphasique qui arrive dans l'au moins une boîte de séparation par la deuxième ou la troisième branche du conduit est projeté contre la paroi périphérique.

Cette projection participe à la séparation des phases liquide et gazeuse qui s'opère dans cette au moins une boîte de séparation. Le fluide diphasique ainsi projeté contre cette paroi périphérique se sépare alors en une phase liquide qui descend vers la lumière ménagée au voisinage de l'extrémité verticale inférieure de la boîte de séparation et en une phase gazeuse qui remonte vers l'au moins un trou ménagé au voisinage de l'extrémité verticale supérieure de cette boîte de séparation. Alternativement, chacun de ces trous peut présenter une forme différente, par exemple circulaire, sans sortir du contexte de l'invention.

Selon une caractéristique de l'invention, l'au moins une boîte de séparation est délimitée par une paroi périphérique, une paroi verticale et au moins une paroi horizontale inférieure agencée entre une extrémité inférieure de la paroi verticale et la paroi périphérique, cette paroi horizontale inférieure s'inscrivant principalement dans un plan perpendiculaire à un plan d'extension principal de la paroi verticale, l'au moins une lumière par laquelle la phase liquide du fluide diphasique est apte à quitter la boîte de séparation concernée étant ménagée dans cette paroi horizontale inférieure.

Tel que précédemment, la paroi horizontale inférieure d'une boîte de séparation correspond à la paroi de cette boîte de séparation la plus proche du dispositif de distribution lorsque le dispositif de séparation est positionné dans la colonne. Selon cette caractéristique de l'invention, l'au moins un trou par lequel la phase gazeuse est apte à quitter la boîte de séparation concerné est ménagé au voisinage d'une extrémité supérieure de la paroi verticale. On entend par « extrémité supérieure » une extrémité de cette paroi verticale la plus proche du premier organe de contact.

Avantageusement, la paroi périphérique qui délimite en partie l'au moins une boîte de séparation présente un profil en arc de cercle configuré pour épouser la forme de la paroi externe de la colonne dans laquelle est destiné à être intégré le dispositif de séparation.

Alternativement, cette paroi périphérique qui délimite l'au moins une boîte de séparation est confondue avec la paroi externe de la colonne. En d'autres termes, selon cette alternative, l'au moins une boîte de séparation est partiellement délimitée par la paroi externe de la colonne.

Selon l'invention, un tuyau peut être agencé dans une lumière ménagée dans la paroi horizontale inférieure de la boîte de séparation, le tuyau comprenant une extrémité verticale supérieure qui s'étend dans la boîte de séparation concernée, le tuyau étant configuré pour être emprunté par la phase liquide du fluide diphasique.

Le tuyau peut présenter un diamètre sensiblement identique au diamètre de la lumière dans laquelle il est agencé de sorte que la phase liquide du fluide diphasique ne puisse pas quitter la boîte de séparation sans passer par ces tuyaux.

On comprend également que le liquide pénètre dans le tuyau par l'extrémité verticale supérieure de ce dernier, ménagé dans la paroi horizontale inférieure ou à l'intérieur de la boîte de séparation correspondante.

Selon une caractéristique de l'invention, l'extrémité verticale supérieure de chaque tuyau est biseautée. Avantageusement, cette forme biseautée permet de limiter l'engorgement de ces tuyaux et ainsi de fluidifier la circulation de la phase liquide issue de la boîte de séparation concernée.

Par exemple, le bord oblique de cette forme biseautée est orienté à l'opposé de la paroi périphérique de la boîte de séparation concernée de sorte qu'au moins une partie de la phase liquide doit contourner le tuyau pour pouvoir l'emprunter, ce qui fluidifie la circulation de cette phase liquide. Pour que la phase liquide puisse facilement rejoindre le tuyau, un point le plus bas du bord oblique de son extrémité verticale supérieure biseautée affleure la paroi horizontale inférieure de la boîte de séparation concernée.

De préférence l'au moins un orifice d'injection du fluide diphasique se trouve en dehors de toute boîte de séparation.

De préférence les boîtes de séparation sont alimentées uniquement par le conduit. De préférence le conduit débouche uniquement dans la ou les boîtes de séparation.

De préférence la partie du conduit se trouvant dans la boîte de séparation est horizontale.

De préférence l'ouverture de l'extrémité du conduit est en face de la paroi périphérique.

De préférence le conduit comprend au moins deux, voire au moins deux branches perpendiculaires à la partie du conduit reliée directement à l'orifice d'injection.

De préférence, la colonne ne comprend qu'un seul orifice d'injection de fluide biphasique.

De préférence, le nombre de boîtes de séparation est un nombre pair.

Selon l'invention, le dispositif de séparation comprend au moins un organe de répartition s'étendant en travers de la colonne selon un axe transversal sensiblement perpendiculaire à l'axe vertical. Au moins un tuyau du dispositif de séparation comprend une extrémité verticale inférieure qui débouche dans l'au moins un organe de répartition, cet organe de répartition étant configuré pour répartir la phase liquide du fluide diphasique sur toute une surface du dispositif de distribution.

On comprend que l'extrémité verticale inférieure de chaque tuyau est opposée à l'extrémité verticale supérieure du tuyau concerné le long de l'axe vertical. Avantageusement le dispositif de séparation permet donc non seulement de séparer la phase liquide et la phase gazeuse du fluide diphasique mais également de répartir la phase liquide de façon homogène sur toute une surface du dispositif de distribution.

Selon une caractéristique de l'invention, l'au moins un organe de répartition s'étend entre les deux boîtes de séparation. Autrement dit, cet au moins un organe de répartition est ainsi alimenté par les phases liquide qui quittent chacune de ces boîtes de séparation. Cela permet avantageusement de pallier un éventuel défaut de distribution de l'une des boîtes de séparation. Par exemple si l'une d'entre elles se bouche, l'organe de répartition reste alimenté par la phase liquide issue de l'autre boîte de séparation.

Au moins une boîte de séparation peut être en outre délimitée par une paroi horizontale supérieure agencée entre l'extrémité supérieure de la paroi verticale et la paroi périphérique. Avantageusement, cette paroi horizontale supérieure permet d'empêcher que le liquide issu du premier organe de contact ne pénètre dans la boîte de séparation concernée et ne vienne perturber la séparation de phases qui se produit dans cette boîte de séparation directement en sortie du conduit du dispositif de séparation.

Encore plus avantageusement, la paroi horizontale supérieure peut s'étendre au-delà de la paroi verticale en direction de l'espace interne de la colonne. Cette paroi horizontale supérieure forme alors un rebord qui empêche le liquide issu du premier organe de contact de pénétrer dans la boîte de séparation via les trous permettant la sortie de la phase gazeuse de cette boîte de séparation.

Selon une caractéristique de l'invention, au moins une boîte de séparation comprend un organe de déviation solidaire de la paroi périphérique qui débouche dans la boîte de séparation concernée, cet organe de déviation étant configuré pour diriger la phase liquide vers l'au moins une lumière ménagée au voisinage de la deuxième extrémité verticale de ladite boîte de séparation.

Tel que précédemment évoqué, la paroi périphérique délimitant la/les boîte(s) de séparation peut être formée par la paroi externe de la colonne, auquel cas l'organe de déviation est solidaire de cette paroi externe de la colonne. Avantageusement, cet organe de déviation est en outre solidaire d'une portion supérieure de l'extrémité du conduit qui débouche dans la boîte de séparation. Par exemple, cet organe de déviation peut être soudé au conduit du dispositif de séparation. Tel que précédemment mentionné, la phase liquide et la phase gazeuse du fluide diphasique sont séparées notamment grâce à la projection du fluide diphasique contre la paroi périphérique qui délimite partiellement la boîte de séparation.

Ainsi, il peut arriver qu'une fraction de la phase liquide de ce fluide diphasique soit projetée vers l'extrémité verticale supérieure de la boîte de séparation. L'organe de déviation est alors avantageusement configuré pour dévier cette fraction de la phase liquide et la diriger vers la paroi horizontale inférieure par laquelle elle est apte à quitter cette boîte de séparation.

Cet organe de déviation évite ainsi que cette fraction de la phase liquide ne perturbe la remontée de la phase gazeuse vers l'au moins un trou ménagé au voisinage de l'extrémité verticale supérieure de la boîte de séparation.

Selon l'invention, le dispositif de distribution comprend au moins une plaque perforée par laquelle le liquide est apte à quitter le dispositif de distribution, une pluralité de cheminées qui émergent de cette plaque perforée et qui sont configurées pour être empruntées par le gaz présent dans la colonne, les cheminées étant empilées les unes après les autres le long de l'axe transversal perpendiculaire à l'axe vertical, l'au moins un organe de répartition s'étendant principalement selon une direction parallèle à cet axe transversal en traversant chaque cheminée.

L'au moins un organe de répartition comprend une pluralité d'échancrures par lesquelles la phase liquide est apte à rejoindre le dispositif de distribution, ces échancrures étant ménagées entre les cheminées du dispositif de distribution. Avantageusement ces échancrures sont ménagées latéralement à l'organe de répartition et elles sont configurées pour permettre à la phase liquide de rejoindre le dispositif de distribution par débordement.

En d'autres termes, la phase liquide s'accumule dans l'organe de répartition jusqu'à ce qu'un niveau de cette phase liquide accumulée atteigne l'une des échancrures latérales et que cette phase liquide puisse alors déborder par cette échancrure latérale.

Selon un exemple de réalisation de la présente invention, au moins une échancrure est ménagée entre deux cheminées successives. Selon un autre exemple de réalisation de la présente invention, plusieurs échancrures peuvent être ménagées entre deux cheminées successives.

Selon un aspect de la présente invention, toutes les échancrures présentent des dimensions verticales équivalentes, ou sensiblement équivalentes. Alternativement, ces échancrures peuvent présenter des dimensions verticales différentes calculées de sorte que la phase liquide du fluide diphasique soit répartie de façon homogène sur toute une surface du dispositif de distribution. Selon un exemple de réalisation de la présente invention, le dispositif de séparation comprend deux organes de répartition, ces deux organes de répartition s'étendant selon deux directions parallèles entre elles.

On comprend alors que les tuyaux par lesquels les phases liquides quittent les boîtes de séparation débouchent dans l'un ou l'autre de ces organes de répartition. Avantageusement, chaque boîte de séparation comprend au moins deux tuyaux chacun de ces tuyaux débouchant dans l'un ou l'autre des organes de répartition.

La présente invention concerne également un ensemble de distillation qui comprend au moins une colonne de séparation gaz/liquide selon l'invention, cette colonne étant encapsulée dans une boîte froide.

Un objet de la présente invention concerne ainsi un procédé de séparation, par exemple de distillation, utilisant une colonne de séparation gaz/liquide s'étendant principalement selon un axe vertical et comprenant une paroi externe délimitant un espace interne dans lequel sont agencés au moins un premier organe de contact dans lequel on met en contact le liquide et le gaz, on collecte le liquide issu du premier organe de contact avec au moins un dispositif de distribution qui sert également à répartir le liquide vers un deuxième organe de contact et on envoie un fluide diphasique, provenant d'une source extérieure à la colonne, dans l'espace interne de la colonne entre le premier organe de contact et le dispositif de distribution par un orifice d'injection du fluide diphasique, ménagé dans la paroi externe de la colonne et on l'y sépare au moyen d'au moins un dispositif de séparation d'un fluide diphasique qui y est agencé, le dispositif de séparation comprenant au moins un conduit agencé, au moins partiellement, entre l'orifice d'injection du fluide diphasique dans l'espace interne de la colonne et au moins une boîte de séparation contiguë avec la paroi externe, la séparation des phases liquide et gazeuse du fluide diphasique s'effectuant au moins dans l'au moins une boîte de séparation.

De préférence, le fluide diphasique se sépare en deux phases d'abord dans le conduit et ensuite dans l'au moins une boîte de séparation.

Selon d'autres caractéristiques du procédé, la colonne peut présenter au moins une des caractéristiques décrites précédemment.

La source de fluide diphasique peut être une conduite. De préférence, la source de fluide diphasique ne comprend aucun séparateur de phase.

Alternativement, la source de fluide diphasique peut comprendre un séparateur de phase. Evidemment les dimensions de celui-ci seront réduites par rapport à celle qu'aurait un séparateur de phases sans moyens de séparation de phases dans l'espace interne.

L'espace interne est de préférence dépourvu de tout plateau et/ou garnissage pour faciliter la séparation d'un fluide diphasique.

On entend par « boîte froide » une boîte dans laquelle la température est maintenue à environ -180°C. En intégrant le dispositif de séparation directement dans l'espace interne de la colonne on comprend que la présente invention permet avantageusement de réduire les dimensions de cette boîte froide, et donc de réduire son coût de production.

D'autres détails, caractéristiques et avantages ressortiront plus clairement à la lecture de la description détaillée donnée ci-après à titre indicatif en relation avec les figures suivantes :
La figure 1 illustre schématiquement une partie supérieure d'une colonne de séparation gaz/liquide selon la présente invention dans laquelle est intégré un dispositif de séparation d'une phase liquide et d'une phase gazeuse d'un fluide diphasique, cette colonne étant encapsulée dans une boîte froide, cette figure 1 rendant notamment visible deux organes de contact entre lesquels est disposé un dispositif de distribution, le dispositif de séparation étant agencé entre un premier organe de contact et le dispositif de distribution.
La figure 2 est une vue en perspective, de dessus, d'une portion de la colonne de séparation gaz/liquide partiellement illustrée sur la figure 1, cette portion de la colonne comprenant le dispositif de séparation et un dispositif de distribution d'un liquide.
La figure 3 est une vue en coupe de la portion de la colonne illustrée sur la figure 2, cette coupe étant réalisée selon un plan vertical et transversal.

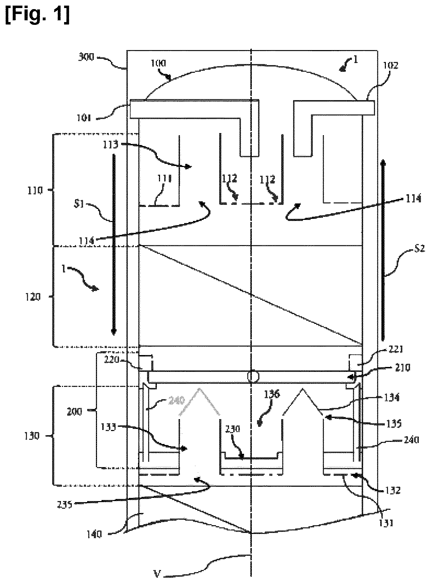

Sur la figure 1 est représentée, de façon schématique, une partie supérieure d'une colonne 1 de séparation gaz/liquide selon la présente invention. Cette colonne 1 s'étend principalement selon un axe vertical V et peut par exemple présenter une section circulaire.

Une telle colonne 1 comprend une paroi externe 100 dans laquelle sont ménagées au moins une arrivée 101 de liquide et une arrivée de gaz - non illustrée ici - ainsi qu'une sortie de liquide - non représentée ici - et une sortie de gaz 102.

Selon un exemple illustré ici, l'arrivée 101 de liquide et la sortie de gaz 102 prennent la forme de tuyaux. La paroi externe 100 délimite un espace interne de la colonne 1 dans lequel circulent une phase liquide et une phase gazeuse d'un fluide homogène dont on souhaite séparer les éléments constitutifs.

La phase liquide circule dans l'espace interne de la colonne 1 selon un premier sens de circulation S1 descendant et la phase gazeuse circule quant à elle dans l'espace interne de la colonne 1 selon un deuxième sens de circulation S2 montant, opposé au premier sens S1. On comprend donc qu'une sortie de liquide et une entrée de gaz sont agencées dans une portion inférieure de la colonne 1 non illustrée ici.

Dans la suite de la description les termes «amont», «aval», «dessus», «dessous», «entrée», «sortie», «supérieur» et «inférieur» se réfèrent au premier sens de circulation S1 descendant de la phase liquide dans l'espace interne de la colonne 1. Dans la suite de la description les termes «phase liquide» et « liquide » et les termes «phases gazeuse» et gaz» sont utilisés sans distinction.

Ainsi, l'espace interne de la colonne 1 comprend, dans cet ordre selon le premier sens de circulation S1 du liquide à travers la colonne 1, un premier dispositif de distribution 110 configuré pour collecter le liquide qui entre dans la colonne 1 par l'arrivée 101 de liquide et pour le répartir sur toute une surface, ici une surface supérieure, d'un premier organe de contact 120. Le liquide qui ressort de ce premier organe de contact 120 est ensuite collecté par un deuxième dispositif 130 de distribution.

Ce deuxième dispositif 130 est alors configuré pour répartir le liquide collecté sur toute une surface d'un deuxième organe de contact 140, ce deuxième organe de contact 140 n'étant que partiellement représenté sur la figure 1. Tel que représenté, la colonne 1 selon l'invention est encapsulée dans une boîte froide 300, c'est-à-dire une boîte dans laquelle la température est maintenue à une température très basse. Une paroi de cette boîte froide 300 comprend ainsi un matériau thermiquement isolant afin de permettre le maintien de cette température très basse.

Chacun des dispositifs de distribution 110, 130 de la colonne 1 comprend au moins une plaque perforée 111, 131, c'est-à-dire une plaque dans laquelle sont ménagés des orifices 112, 132 par lesquels le liquide est apte à quitter le dispositif 110, 130 de distribution concerné. Tel qu'illustré, des cheminées 113, 133 émergent de cette plaque 111, 131 et s'étendent parallèlement à l'axe vertical V lorsque le dispositif de distribution est disposé dans la colonne 1 de séparation. Selon l'invention, ces cheminées 113, 133 sont configurées pour être empruntées par le gaz selon le deuxième sens de circulation S2.

A cette fin, les plaques 111, 131 de ces dispositifs 110, 130 de distribution comprennent, chacune, une pluralité de découpes 114, 235, agencées en regard de chacun de ces cheminées 133. Autrement dit, chaque plaque 111, 131 comprend autant de découpes 114, 235 que le dispositif 110, 130 de distribution concerné comprend de cheminées 113, 133.

Le deuxième dispositif 130 de distribution diffère du premier dispositif de distribution 110, notamment par la présence de moyens d'obturation 134 agencés sur chaque cheminée 133, à une extrémité supérieure de celle-ci. Ces moyens d'obturation 134 sont avantageusement configurés pour empêcher le liquide qui quitte le premier organe de contact 120 de s'introduire dans les cheminées 133 du deuxième dispositif 130 de distribution et de perturber la remontée de gaz via ces cheminées 133.

Des ouvertures 135 sont ménagées entre chaque moyen d'obturation 134 et la cheminée 133 sur laquelle il est agencé de sorte à permettre au gaz circulant dans ces cheminées 133 de quitter ce deuxième dispositif 130 de distribution afin de rejoindre le premier organe de contact 120. Par exemple ces ouvertures 135 peuvent être réalisées par des trous percés dans une région supérieure de chaque cheminée 133, sous le moyen d'obturation 134 correspondant.

Tel qu'illustré sur la figure 1, chacun de ces moyens d'obturation 134 comprend deux parois inclinées de sorte que ces moyens d'obturation 134 prennent la forme de pyramides ouvertes à leurs bases. On comprend que le liquide qui descend sur les parois inclinées de ces moyens d'obturation 134 est ainsi dévié de sorte qu'il ne puisse pas rejoindre les cheminées 133. On remarque par ailleurs que deux cheminées 133 successives délimitent entre elles une goulotte 136 configurée pour collecter le liquide issu du premier organe de contact 120. Tel qu'illustré, l'extrémité verticale inférieure de ces goulottes 136 est formée par une portion de la plaque perforée 131.

Avantageusement, les orifices 132 par lesquels le liquide est apte à quitter le deuxième dispositif 130 de distribution sont ainsi ménagés dans les portions de la plaque perforée 131 formant les fonds de ces goulottes 136. On comprend alors que les parois inclinées des moyens d'obturation 134 sont inclinées en direction de ces goulottes 136, de sorte que le liquide qui arrive sur ces moyens d'obturation 134 soit dévié vers ces goulottes 136 et donc vers les orifices 132. Il doit être compris que la figure 1 est schématique et que le deuxième dispositif 130 de distribution peut comprendre en fonction de sa dimension et par exemple de son diamètre une pluralité de cheminées 133 ainsi qu'une pluralité de goulottes 136.

Avantageusement, le deuxième dispositif 130 de distribution présente une forme de disque dimensionné pour s'adapter parfaitement à la section circulaire de la colonne 1.

Les goulottes 136 et les cheminées 133 sont agencées en série, parallèlement les unes aux autres et en alternance, de manière à s'étendre sur toute la surface du disque.

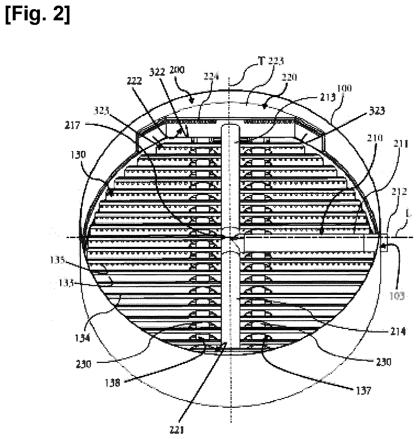

Selon l'invention, la colonne 1 comprend un dispositif de séparation 200 agencé dans l'espace interne de la colonne 1. Ce dispositif de séparation 200 est avantageusement positionné entre le premier organe de contact 120 et le deuxième dispositif 130 de distribution. Afin de permettre l'introduction du fluide diphasique dans l'espace interne de la colonne 1, au moins un orifice d'injection 103 de ce fluide est ménagé dans la paroi externe 100 de cette colonne 1, en aval du premier organe de contact 120. Cet orifice d'injection 103 est par exemple représenté sur la figure 2.

Autrement dit, cet orifice d'injection est ménagé entre le premier organe de contact 120 et le deuxième dispositif 130 de distribution. Le fluide est injecté dans l'espace interne de la colonne 1 sous forme diphasique, c'est-à-dire que le fluide injecté comprend une phase gazeuse et une phase liquide.

Tel que précédemment évoqué, le liquide et le gaz circulent dans l'espace interne de la colonne 1 selon deux sens opposés. On comprend donc que pour que la colonne 1 fonctionne de façon optimale, il convient de séparer la phase liquide et la phase gazeuse du fluide diphasique injecté par l'orifice d'injection 103 susmentionné. Cette séparation des phases doit être réalisée à très basse température, c'est-à-dire une température de l'ordre de la température maintenue dans la boîte froide 300.

Tel qu'illustré, le dispositif de séparation 200 est ainsi positionné en regard de l'orifice d'injection par lequel le fluide diphasique est injecté dans la colonne 1. Avantageusement, ce dispositif de séparation 200 est peu volumineux en comparaison avec les autres éléments présents dans l'espace interne de la colonne 1 de sorte que son insertion dans cette colonne est réalisable sans que la hauteur de cette colonne 1 ne soit significativement augmentée.

Ce dispositif de séparation 200 comprend un conduit 210 qui s'étend au moins entre l'orifice d'injection 103 ménagé dans la paroi externe 100 de la colonne 1 et au moins une boîte de séparation 220, 221, dans laquelle la phase liquide et la phase gazeuse du fluide diphasique sont séparées. Selon l'exemple illustré ici, le dispositif de séparation 200 comprend deux boites de séparation 220, 221 diamétralement opposées.

Il est également envisageable que le conduit 210 ne se divise pas mais s'étend à travers la colonne en ligne droite pour arriver à une seule boîte de séparation, diamétralement opposée à l'orifice d'injection. Une autre possibilité pour le cas avec une seule boîte de séparation serait d'avoir un conduit 210 en forme de L ou en forme de V.

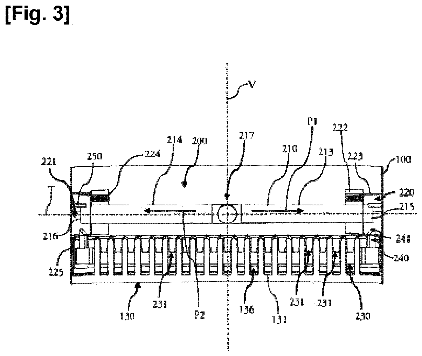

Le dispositif de séparation 200 comprend en outre au moins un organe de répartition 230 du liquide configuré pour répartir la phase liquide du fluide diphasique sur toute une surface du deuxième dispositif 130 de distribution. On remarque également sur la figure 1 qu'au moins un tuyau 240 relie chaque boîte de séparation 220, 221 à l'organe de répartition 230. Chacun de ces tuyaux 240 est configuré pour acheminer la phase liquide du fluide diphasique de la boîte de séparation 220, 221 dans laquelle il a été séparé vers l'organe de répartition 230. En d'autres termes, cet organe de répartition 230 est alimenté simultanément en liquide par les deux boîtes de séparation 220, 221. Selon l'exemple de réalisation représenté sur les figures 2 et 3, le dispositif de séparation 200 comprend avantageusement deux organes de répartition 230 du liquide, chacun de ces organes de répartition 230 étant avantageusement alimenté en liquide par chacune des boîtes de séparation 220, 221.

En référence aux figures 2 et 3, nous allons maintenant décrire plus en détails l'agencement et le fonctionnement du dispositif de séparation 200 agencé dans l'espace interne de la colonne 1.

La figure 2 est une vue en perspective, de dessus, d'une portion de la colonne comprenant le dispositif de séparation 200 et le deuxième dispositif de distribution 130.

On remarque notamment de cette figure 2 que les cheminées 133 du deuxième dispositif 130 de distribution sont agencées les unes après les autres le long d'un axe transversal T perpendiculaire à l'axe vertical. On remarque également que chaque cheminée 133 s'étend principalement selon un axe longitudinal L perpendiculaire à l'axe transversal T et à l'axe vertical et que chaque moyen d'obturation 134 s'étend sur toute une dimension longitudinale de la cheminée 133 sur laquelle il est agencé. Cette figure 2 rend également particulièrement visible les ouvertures 135 par lesquelles le gaz qui emprunte ces cheminées 133 quitte le deuxième dispositif 130 de distribution.

Pour faciliter la compréhension de la figure 2 ces ouvertures 135 sont représentées sur une partie des cheminées 133 seulement mais on comprend qu'en réalité, des ouvertures 135 sont ménagées sur chaque cheminée 133.

Tel que précédemment évoqué, ce dispositif de séparation 200 comprend notamment un conduit 210 et deux boîtes de séparation 220, 221. Ce conduit 210 comprend au moins une première branche d'admission par laquelle le fluide diphasique est apte à rejoindre le dispositif de séparation 200, une deuxième branche d'alimentation qui relie la première branche d'admission à l'une des boîtes de séparation 220, et une troisième branche d'alimentation qui relie la première branche d'admission à l'autre boîte de séparation 221. Dans l'exemple illustré ici, les boîtes de séparation 220, 221 sont diamétralement opposées et le conduit 210 présente une forme en T.

En d'autres termes, le conduit 210 comprend une première branche 211 dont une première extrémité 212 s'étend à l'extérieur de la colonne, une deuxième branche 213 dont une deuxième extrémité s'étend dans une première boîte de séparation 220 et une troisième branche 214 dont une troisième extrémité s'étend dans une deuxième boîte de séparation 221. La deuxième extrémité et la troisième extrémité s'étendant respectivement dans la première boîte de séparation 220 et dans la deuxième boîte de séparation 221, et elles ne sont de sorte pas visibles sur cette figure 2. Tel qu'illustré, la première extrémité 212 traverse la paroi externe 100 de la colonne via l'orifice d'injection 103 mentionné ci-dessus.

L'au moins un conduit 210 constitué par plusieurs branches 211,212,213, a une longueur telle que la distance parcourue par le fluide diphasique entre l'orifice d'injection et la boîte de séparation est au moins égale à 80%, voire au moins égale à 90%, du diamètre de la colonne. Cette distance parcourue favorise la stabilisation de l'écoulement avant de rentrer dans la boîte de séparation.

En arrivant dans la ou les boîtes de séparation, le fluide du conduit est projeté contre la paroi de la colonne, ce qui favorise la séparation des phases.

La ou les boîtes de séparation sont pourvues en contigu avec la paroi pour gêner le moins possible le passage de gaz dans la colonne et ainsi permettre à la distillation de s'effectuer sous de bonnes conditions.

Avantageusement, le fait que cette première extrémité 212 s'étende au-delà de la paroi externe 100 de la colonne permet de faciliter le raccordement de ce conduit 210 à un dispositif d'alimentation - non illustré ici - configuré pour alimenter le dispositif de séparation 200 en fluide diphasique. On comprend donc que le fluide diphasique est injecté dans le conduit 210 par sa première extrémité 212 puis qu'il chemine jusqu'à chacune des boîtes de séparation 220, 221 qu'il rejoint grâce aux deuxième et troisième branches 213, 214 de ce conduit 210.

Selon l'exemple illustré ici, le conduit 210 présente un diamètre constant sur toute sa dimension, de sorte à éviter la création de perturbations dans l'écoulement du fluide depuis l'entrée du conduit 210 jusqu'aux boîtes de séparation 220, 221. De façon avantageuse, ce diamètre est calculé de sorte que le fluide diphasique y circule à une vitesse suffisamment faible pour qu'une pré-séparation des phases liquide et gazeuse s'opère en amont des boîtes de séparation 220, 221. On entend par «pré-séparation» le fait que, déjà dans le conduit 210, la phase gazeuse du fluide diphasique a tendance à monter tandis que la phase liquide a quant à elle tendance à descendre.

Ainsi, la séparation des phases qui s'opère par la suite dans les boîtes de séparation 220, 221 est facilitée, ce qui permet de réduire la taille de ces boîtes de séparation 220, 221 et par conséquent de réduire les coûts de production d'une colonne selon l'invention.

Les boîtes de séparation 220, 221 sont avantageusement diamétralement opposées le long de l'axe transversal T. Selon l'exemple illustré ici, ces boîtes de séparation 220, 221 sont symétriques par rapport à un plan vertical médian, c'est-à-dire un plan dans lequel s'inscrivent l'axe vertical et un diamètre longitudinal de la colonne, de sorte que la description qui est faite pour l'une de ces boîtes de séparation est également valable pour l'autre de ces boîtes de séparation.

Tel que précédemment évoqué, le dispositif de séparation 200 comprend également deux organes de répartition 230 qui s'étendent selon deux directions parallèles. Tel que représenté, ces directions sont également parallèles à l'axe transversal T de sorte que ces organes de répartition 230 s'étendent depuis la première boîte de séparation 220 jusqu'à la deuxième boîte de séparation 221 en traversant chacune des cheminées 133 du deuxième dispositif 130 de distribution. Autrement dit, chaque cheminée 133 présente un premier évidement 137 traversant et un deuxième évidement 138 traversant, par lesquels passe l'un ou l'autre des organes de répartition 230.

Avantageusement les premiers évidements 137 de deux cheminées 133 successives le long de l'axe transversal T sont alignés parallèlement à cet axe transversal T. De la même manière, les deuxièmes évidements 138 de deux cheminées successives le long de l'axe transversal T sont alignés parallèlement à cet axe transversal T.

En d'autres termes, tous les premiers évidements 137 sont alignés ensemble le long d'un axe parallèle à l'axe transversal T et tous les deuxièmes évidements 138 sont alignés ensemble le long d'un autre axe, également parallèle à l'axe transversal T. On comprend que les premiers et les deuxièmes évidements 137, 138 ménagées dans les cheminées 133 sont étanches de sorte que le liquide qui circule dans l'un ou l'autre des organes de répartition 230 ne puisse pas entrer dans ces cheminées 133. Les deux organes de répartition 230 sont identiques et la description donnée ci-après de l'un est directement transposable à l'autre.

Tel qu'illustré sur cette figure 2, on remarque que chaque boîte de séparation 220, 221 est délimitée au moins par une paroi périphérique , par une paroi verticale 222, c'est-à-dire une paroi qui s'étend principalement dans un plan dans lequel s'inscrivent l'axe vertical et l'axe longitudinal L et par une paroi horizontale supérieure 223, c'est-à-dire une paroi qui s'étend principalement dans un plan horizontal, c'est-à-dire un plan perpendiculaire à la paroi verticale 222 et dans lequel s'inscrivent l'axe transversal T et l'axe longitudinal L.

Plus particulièrement, la paroi verticale 222 comprend une partie principale 322 destinée à être traversée par la deuxième ou la troisième branche 213, 214 du conduit 210 et deux parties latérales 323. Tel que représenté sur la figure 2, cette partie principale 322 et les deux parties latérales 323 s'étendent dans trois plans verticaux distincts et sécants entre eux. Tel qu'illustré, ces plans verticaux sont agencés de sorte à suivre une courbure de la paroi périphérique de la boîte de séparation 220, 221 concernée.

Selon l'exemple illustré sur les figures, la paroi périphérique qui participe à délimiter chaque boîte de séparation 220, 221 est réalisée par la paroi externe de la colonne. Alternativement, cette paroi périphérique pourrait être distincte de la paroi externe de la colonne à condition qu'elle présente alors une forme courbe ayant pour profil un arc de cercle de forme complémentaire à la forme de section circulaire de la paroi externe de la colonne de sorte que le dispositif de séparation épouse parfaitement la forme de cette colonne. La paroi horizontale supérieure 223 est dite « supérieure » en ce sens qu'il s'agit de la paroi de cette boîte de séparation 220, 221 la plus proche du premier organe de contact lorsque le dispositif de séparation 200 est positionné dans la colonne. Ainsi, cette paroi horizontale supérieure 223 s'étend entre une extrémité supérieure de la paroi verticale 222 et la paroi périphérique de la boîte de séparation 220, 221 concernée.

Avantageusement, cette paroi horizontale supérieure 223 permet d'éviter que le liquide qui descend depuis le premier organe de contact de la colonne ne pénètre dans la boîte de séparation 220, 221 concernée et ne perturbe la séparation du fluide diphasique qui a lieu dans ladite boîte de séparation 220, 221.

On remarque également qu'une pluralité de trous 224 sont ménagés dans la paroi verticale 222 et plus précisément au voisinage de l'extrémité supérieure de cette paroi verticale 222. Tel que représenté, ces trous 224 sont répartis uniformément sur la partie principale 322 et sur les parties latérales 323 de cette paroi verticale 222.

Tel que cela sera plus amplement détaillé ci-après, ces trous 224 sont configurés pour permettre à la phase gazeuse du fluide diphasique de quitter la boîte de séparation 220, 221 concernée.

Ces trous 224 sont avantageusement ménagés au-dessus de l'extrémité du conduit 210 qui débouche dans la boîte de séparation 220, 221 concernée, c'est-à-dire au-dessus d'une zone de jonction entre le conduit et la boîte de séparation concernée.

Autrement dit, lorsque le dispositif de séparation 200 est positionné dans la colonne 1, une distance mesurée parallèlement à l'axe vertical V entre l'un de ces trous 224 et le premier organe de contact est inférieure à une distance mesurée parallèlement à l'axe vertical V entre le conduit 210 et ce premier organe de contact.

On comprend également que cette paroi verticale 222, et plus précisément, la partie principale 322 de cette paroi verticale 222, comprend une découpe par laquelle le conduit 210, et plus exactement la deuxième extrémité de la deuxième branche 213 ou la troisième extrémité de la troisième branche 214 de ce conduit 210, peut être introduit dans cette boîte de séparation 220.

En référence à la figure 3, nous allons maintenant décrire plus amplement le fonctionnement du dispositif de séparation 200. Cette figure 3 est une coupe de la portion de la colonne illustrée sur la figure 2, cette coupe étant réalisée selon un plan vertical et transversal, c'est-à-dire un plan dans lequel s'inscrivent l'axe vertical V et l'axe transversal T.

Tel que précédemment évoqué, le fluide diphasique rejoint le conduit 210 par sa première extrémité - non visible sur la figure 3 - puis chemine à travers la première branche jusqu'à une bifurcation 217 au niveau de laquelle une première portion P1 du fluide diphasique est dirigée vers la deuxième extrémité 215 de la deuxième branche 213 et une deuxième portion P2 de ce fluide diphasique est quant à elle dirigée vers la troisième extrémité 216 de la troisième branche 214 de ce conduit 210.

Tel qu'illustré, la deuxième extrémité 215 débouche dans la première boîte de séparation 220 et la troisième extrémité 216 débouche quant à elle dans la deuxième boîte de séparation 221. Tel que décrit ci-dessus, la première boîte de séparation 220 et la deuxième boîte de séparation 221 sont symétriques et la description qui est faite ci-après de l'une s'étend à l'autre. De la même manière, les références indiquées pour l'une de ces boîtes de séparation 220, 221 sont transposables à l'autre.

On remarque tout d'abord que, outre la paroi périphérique, la paroi verticale 222 et la paroi horizontale supérieure 223, chaque boîte de séparation 220, 221 est délimitée par une paroi horizontale inférieure 225.

Cette paroi horizontale 225 est dite « inférieure » en ce sens qu'il s'agit de la paroi la plus proche du deuxième dispositif 130 de distribution lorsque le dispositif de séparation 200 est positionné dans la colonne. Ainsi cette paroi horizontale inférieure 225 s'étend dans un plan perpendiculaire au plan d'extension principal de la paroi verticale 222, et plus particulièrement dans un plan perpendiculaire au plan d'extension principal de la partie principale 322 de cette paroi verticale 222, depuis une extrémité inférieure de cette paroi verticale 222 jusqu'à la paroi périphérique.

Tel que précédemment mentionné, le fluide diphasique arrive dans les boîtes de séparation 220, 221 sous une forme déjà partiellement séparée. Avantageusement, les deuxième et troisième extrémités 212, 213 du conduit 210 débouchent, chacune, à une distance relativement faible de la paroi périphérique de sorte que le fluide diphasique qui sort de ce conduit 210 est au moins partiellement projeté contre cette paroi périphérique. Une fois projeté contre la paroi périphérique de la boîte de séparation 220, 221 concernée, la phase gazeuse du fluide diphasique remonte vers la paroi horizontale supérieure 223 tandis que la phase liquide descend vers la paroi horizontale inférieure 225.

Tel que précédemment évoqué, la phase gazeuse quitte alors la boîte de séparation par les trous 224 ménagés dans la paroi verticale 222 pour rejoindre le premier organe de contact précédemment décrit.

Au moins une lumière est par ailleurs ménagée dans la paroi horizontale inférieure 225, cette lumière étant configurée pour permettre le passage du tuyau 240 par lequel la phase liquide est apte à rejoindre l'un des organes de répartition 230. Selon l'exemple illustré ici, chaque tuyau 240 s'étend principalement selon une direction parallèle à l'axe vertical V. Tel que représenté, ce tuyau 240 comprend ainsi une extrémité verticale supérieure 241 qui s'étend dans la boîte de séparation 220, 221 concernée et une extrémité verticale inférieure - non visible sur les figures - qui débouche quant à elle dans l'un des organes de répartition 230.

Dans l'exemple illustré, l'extrémité verticale supérieure 241 du tuyau 240 présente une forme biseautée. Avantageusement, le bord oblique de cette forme biseautée est tourné à l'opposé de la paroi périphérique, de sorte que la phase liquide, coulant depuis le conduit, qui tombe principalement entre cette extrémité verticale supérieure 241 du tuyau 240 et la paroi périphérique, doit contourner ce tuyau 240 pour pouvoir l'emprunter.

Avantageusement, cela permet de fluidifier la circulation de cette phase liquide et de ralentir l'engorgement de ce tuyau 240 afin de maximiser le rendement de la boîte de séparation 220, 221 concernée. Afin de faciliter encore l'écoulement de la phase liquide dans ce tuyau 240, on remarque qu'un point le plus bas de ce bord oblique affleure la paroi horizontale inférieure 225.

Tel que précédemment décrit, chaque organe de répartition 230 s'étend parallèlement à l'axe transversal T entre la première boîte de séparation 220 et la deuxième boîte de séparation 221 de sorte que cet organe de répartition 230 est alimenté par les phases liquides issues de chacune de ces boîtes de séparation 220, 221.

Avantageusement, cette configuration permet de pallier à une éventuelle défaillance de l'une ou l'autre de ces boîtes de séparation 220, 221. On comprend en effet que même si l'une de ces boîtes de séparation n'alimente plus l'organe de répartition pour une raison quelconque, cet organe de répartition reste alimenté par l'autre boîte de séparation.

Tel que décrit ci-dessus, le dispositif de séparation 200 selon l'invention comprend deux organes de répartition 230 identiques. On comprend donc qu'au moins deux lumières sont ménagées dans chaque paroi horizontale inférieure 225 de chaque boîte de séparation 220, 221, chacune de ces lumières étant configurée pour autoriser le passage d'un tuyau 240.

Ainsi, au moins deux tuyaux 240 débouchent dans chaque boîte de séparation 220, 221, chacun de ces tuyaux 240 rejoignant l'un des organes de répartition 230. Autrement dit, chaque organe de répartition 230 est alimenté par les phases liquides issues de chacune des boîtes de séparation 220, 221.

Chaque organe de répartition 230 est configuré pour répartir la phase liquide du fluide diphasique sur toute une surface du deuxième dispositif de distribution 130. Plus précisément, on comprend que cette phase liquide doit être répartie dans chacune des goulottes 136 de ce deuxième dispositif de distribution 130 afin de pouvoir quitter ce dernier via les orifices ménagés dans les parois de fond de ces goulottes 136. A cet effet, chaque organe de répartition 230 comprend une pluralité d'échancrures 231 ménagées entre les cheminées 133 du deuxième dispositif de distribution 10. On remarque que ces échancrures 231 sont ménagées latéralement à cet organe de répartition 230.

De la sorte, ces échancrures 231 sont ménagées dans des portions de l'organe de répartition 230 agencées dans les goulottes 136. Ces échancrures 231 permettent une répartition du liquide par débordement.

En d'autres termes, le liquide s'accumule dans l'organe de répartition 230 jusqu'à ce qu'un niveau de ce liquide accumulé dépasse l'une des échancrures 231 latérales de cet organe de répartition 230. Le liquide peut ainsi déborder de cet organe de répartition 230 pour rejoindre le dispositif de distribution 130.

Selon l'exemple illustré ici, ces échancrures 231 présentent toutes des dimensions sensiblement équivalentes.

Selon un autre exemple non représenté ici, ces échancrures sont plus ou moins profondes en fonction de leur position.

Autrement dit, plus l'échancrure est proche d'un centre du dispositif de distribution, plus une dimension verticale de cette échancrure est importante de sorte à assurer une répartition parfaitement homogène de la phase liquide sur toute la surface du dispositif de distribution.

Tel que précédemment décrit, les deuxième et troisième extrémités 212, 213 du conduit 210 débouchent, chacune, à une distance relativement faible de la paroi périphérique de sorte que le fluide diphasique qui sort de ce conduit 210 est au moins partiellement projeté contre cette paroi périphérique.

Afin d'éviter que, dû à cette projection, la phase liquide ne soit déviée vers la paroi horizontale supérieure 223 et ne perturbe la circulation de la phase gazeuse, un organe de déviation 250 est avantageusement positionné entre la deuxième ou la troisième extrémité 215, 216 du conduit 210 et la paroi périphérique. Ainsi, chaque boîte de séparation 220, 221 comprend un organe de déviation 250 solidaire de l'extrémité concernée du conduit 210, et plus particulièrement d'une portion supérieure de cette extrémité.

Tel que représenté, ces organes de déviation 250 s'étendent jusqu'à la paroi périphérique. Par exemple ces organes de déviation 250 peuvent être soudés au conduit 210. Ils présentent respectivement une dimension longitudinale sensiblement équivalente à un diamètre externe du conduit 210 de sorte que la phase gazeuse puisse contourner cet organe de déviation pour rejoindre les trous 224 ménagés dans la paroi verticale 222.

On remarque enfin que, selon l'exemple illustré sur la figure 3, la paroi horizontale supérieure 223 de chaque boîte de séparation 220, 221 est inclinée de manière à former une rampe descendant vers le centre de la colonne, de sorte que cette paroi horizontale supérieure 223 permet non seulement d'éviter que le liquide déjà présent dans la colonne ne rejoigne la boîte de séparation 220, 221 concernée mais également de diriger le liquide qui tombe sur cette paroi horizontale supérieure 223 vers le deuxième dispositif de distribution 130.

Selon un exemple non illustré ici, cette paroi horizontale supérieure peut également s'étendre au-delà de la paroi verticale en direction de l'espace interne de sorte qu'elle forme un rebord qui évite que le liquide qui descend du premier organe de contact ne rejoigne la boîte de séparation concernée via les trous ménagés dans cette paroi verticale et destinés à être empruntés par la phase gazeuse.

La présente invention propose ainsi une colonne de séparation gaz/liquide dans laquelle un fluide diphasique peut être injecté sans que ses différentes phases n'aient à être séparées en amont. Avantageusement, cela permet de réduire les dimensions de la boîte froide dans laquelle cette colonne est classiquement encapsulée avec un dispositif de séparation externe, et ainsi de réduire les coûts de production d'une telle boîte froide.

Toutefois la présente invention ne saurait se limiter aux moyens et configurations décrits et illustrés ici et elle s'étend également à tout moyens et toute configuration équivalents et à toute combinaison techniquement opérante de tels moyens.

En particulier, la forme, le nombre et la disposition des boîtes de séparation du dispositif de séparation peuvent être modifiés sans nuire à l'invention dans la mesure où ces boîtes de séparation remplissent les fonctionnalités décrites dans le présent document.

Par exemple comme illustré à la Figure 4, quatre boîtes de séparation peuvent être utilisés. Ici les boîtes de séparation sont délimitée par une paroi périphérique, la paroi verticale 222 suivant un corde de la section de la colonne de la Figure 2, c'est-à-dire une paroi qui s'étend principalement dans un plan dans lequel s'inscrivent l'axe vertical et l'axe longitudinal L et par une paroi horizontale supérieure 223, c'est-à-dire une paroi qui s'étend principalement dans un plan horizontal, c'est-à-dire un plan perpendiculaire à la paroi verticale 222 et dans lequel s'inscrivent l'axe transversal T et l'axe longitudinal L. Les quatre boîtes 220, 221, 320,321 sont formées en plaçant une paroi verticale 325, 326 au milieu de l'espace.

Tel que précédemment évoqué, le fluide diphasique rejoint le conduit 210 par sa première extrémité 212 par l'ouverture 103 puis chemine à travers la première branche jusqu'à une première bifurcation au niveau de laquelle une première portion P1 du fluide diphasique est dirigée vers la deuxième extrémité 215 de la deuxième branche 213 et une deuxième portion P2 de ce fluide diphasique est quant à elle dirigée vers la troisième extrémité 216 de la troisième branche 214 de ce conduit 210.

Tel qu'illustré, la deuxième extrémité 215 débouche dans la première boîte de séparation 220 et la troisième extrémité 216 débouche quant à elle dans la deuxième boîte de séparation 221. Tel que décrit ci-dessus, la première boîte de séparation 220 et la deuxième boîte de séparation 221 sont symétriques et la description qui est faite ci-après de l'une s'étend à l'autre. De la même manière, les références indiquées pour l'une de ces boîtes de séparation 220, 221 sont transposables à l'autre.

Une troisième portion P3 du fluide diphasique continue dans la première branche et arrive à une deuxième bifurcation où tout le fluide restant est envoyé soit dans la troisième branche 313 soit dans la quatrième branche 314. La troisième branche arrive dans la troisième boîte 321 et la quatrième branche dans la quatrième boîte 320.

Une fois projeté contre la paroi périphérique de la boîte de séparation 220, 221, 320,321 concernée, la phase gazeuse du fluide diphasique remonte vers la paroi horizontale supérieure 223 tandis que la phase liquide descend vers la paroi horizontale inférieure 225.

Tel que précédemment évoqué, la phase gazeuse quitte alors la boîte de séparation par les trous 224 ménagés dans la paroi verticale 222 pour rejoindre le premier organe de contact précédemment décrit.

## Revendications

1. Colonne (1) de séparation gaz/liquide s'étendant principalement selon un axe vertical (V) et comprenant une paroi externe cylindrique (100) délimitant un espace interne dans lequel sont agencés au moins un premier organe de contact (120) dans lequel le liquide et le gaz sont mis en contact, au moins un dispositif de distribution (130) configuré pour collecter le liquide issu du premier organe de contact (120) et pour le répartir vers un deuxième organe de contact (140), au moins un dispositif de séparation (200) d'un fluide diphasique agencé dans l'espace interne de la colonne (1) entre le premier organe de contact (120) et le dispositif de distribution (130), au moins un orifice d'injection (103) du fluide diphasique étant ménagé dans la paroi externe (100) de la colonne (1), cet orifice d'injection (103) étant configuré pour permettre l'injection du fluide diphasique dans l'espace interne de la colonne (1), entre le premier organe de contact (120) et le dispositif de distribution (130), le dispositif de séparation (200) comprenant au moins un conduit (210) agencé, au moins partiellement, entre l'orifice d'injection (103) du fluide diphasique dans l'espace interne de la colonne (1) et au moins deux boîtes de séparation (220, 221) ces au moins deux boîtes de séparation (220, 221) étant configurées pour permettre la séparation des phases liquide et gazeuse du fluide diphasique et étant contiguës avec la paroi externe et l'au moins un conduit (210) a une longueur telle que la distance parcourue par le fluide diphasique entre l'orifice d'injection et la boîte de séparation (220, 221) est au moins égale à 80%, voire au moins égale à 90%, du diamètre de la colonne **caractérisé en ce que** les au moins deux boîtes de séparation sont chacune délimitée par une paroi périphérique et une paroi verticale (222), formant un corde de la section circulaire de la colonne, et par au moins une paroi inférieure agencée entre une extrémité inférieure de la paroi verticale et la paroi périphérique, le conduit présentant au moins trois branches (211, 213, 214) parmi lesquelles une première branche (211) traverse l'orifice d'injection (103) du fluide diphasique et une deuxième et une troisième branches (213, 214,313,314), s'étendant chacune perpendiculairement à la première branche, relient respectivement la première branche (214) à l'une des boîtes de séparation (220, 221), chacune des branches traversant la paroi verticale de sorte qu'une extrémité (215,216) du conduit se trouve dans la boîte de séparation, les boîtes de séparation (220, 221) ou paires de boîtes de séparation (220 ; 221) sont diamétralement opposées.

2. Colonne (1) selon la revendication 1, dans laquelle le conduit (210) du dispositif de séparation (200) présente un diamètre constant entre l'orifice d'injection (103) du fluide diphasique et l'au moins une boîte de séparation (220, 221).

3. Colonne (1) selon l'une quelconque des revendications 1 à 2, dans laquelle au moins une boîte de séparation (220, 221) comprend au moins un trou (224) par lequel la phase gazeuse du fluide diphasique est apte à quitter la boîte de séparation (220, 221) concernée et au moins une lumière par laquelle la phase liquide du fluide diphasique est apte à quitter cette boîte de séparation (220, 221), l'au moins un trou (224) étant ménagé au voisinage d'une première extrémité verticale de la boîte de séparation (220, 221) et la lumière étant ménagée au voisinage d'une deuxième extrémité verticale de cette boîte de séparation (220, 221), opposée à la première extrémité verticale.

4. Colonne (1) selon la revendication précédente, dans laquelle l'au moins un trou (224) est ménagé au-dessus d'une zone de jonction entre le conduit (210) et l'au moins une boîte de séparation (220, 221).

5. Colonne (1) selon l'une quelconque des revendications 1 à 4, dans laquelle l'au moins une boîte de séparation (220, 221) est délimitée par la paroi périphérique, la paroi verticale (222) et au moins une paroi horizontale inférieure (225) agencée entre une extrémité inférieure de la paroi verticale (222) et la paroi périphérique, cette paroi horizontale inférieure (225) s'inscrivant principalement dans un plan perpendiculaire à un plan d'extension principal de la paroi verticale (222), l'au moins une lumière par laquelle la phase liquide du fluide diphasique est apte à quitter la boîte de séparation (220, 221) concernée étant ménagée dans cette paroi horizontale inférieure (225).

6. Colonne (1) selon la revendication précédente, dans laquelle un tuyau (240) est agencé dans une lumière ménagée dans la paroi horizontale inférieure (225) de la boîte de séparation (220, 221), le tuyau (240) comprenant une extrémité verticale supérieure (241) qui s'étend dans la boîte de séparation (220, 221) concernée, et le tuyau (240) étant configuré pour être emprunté par la phase liquide du fluide diphasique.

7. Colonne (1) selon la revendication précédente, dans laquelle l'extrémité verticale supérieure (241) du tuyau (240) est biseautée.

8. Colonne (1) selon l'une quelconque des revendications 1 à 7, dans laquelle le dispositif de séparation (200) comprend au moins un organe de répartition (230) s'étendant en travers de la colonne (1) selon un axe transversal (T) sensiblement perpendiculaire à l'axe vertical (V), et dans laquelle au moins un tuyau (240) du dispositif de séparation (200) comprend une extrémité verticale inférieure qui débouche dans l'au moins un organe de répartition (230), cet organe de répartition (230) étant configuré pour répartir la phase liquide du fluide diphasique sur toute une surface du dispositif de distribution (130).

9. Colonne (1) selon la revendication précédente, combinée avec l'une des revendications 4 ou 5, dans laquelle l'au moins un organe de répartition (230) s'étend entre les deux boîtes de séparation (220, 221).

10. Colonne (1) selon l'une quelconque des revendications 1 à 9, dans laquelle au moins une boîte de séparation (220, 221, 320,321) est en outre délimitée par une paroi horizontale supérieure (223) agencée entre une extrémité supérieure de la paroi verticale (222) et la paroi périphérique.

11. Colonne (1) selon la revendication précédente, dans lequel la paroi horizontale supérieure (223) s'étend au-delà de la paroi verticale (222) en direction de l'espace interne de la colonne (1).

12. Colonne (1) selon l'une quelconque des revendications 1 à 11, dans laquelle au moins une boîte de séparation (220, 221, 320,321) comprend un organe de déviation (250) solidaire de la paroi externe (100) de la colonne (1) qui débouche dans la boîte de séparation (220, 221) concernée, cet organe de déviation (250) étant configuré pour diriger la phase liquide vers l'au moins une lumière ménagée au voisinage de la deuxième extrémité verticale de ladite boîte de séparation (220, 221).

13. Colonne (1) selon l'une quelconque des revendications précédentes, dans laquelle le dispositif de distribution (130) comprend au moins une plaque perforée (131) par laquelle le liquide est apte à quitter le dispositif de distribution (130), une pluralité de cheminées (133) qui émergent de cette plaque perforée (131) et qui sont configurées pour être empruntées par le gaz présent dans la colonne (1), les cheminées (133) étant empilées les unes après les autres le long de l'axe transversal (T) perpendiculaire à l'axe vertical (V), l'au moins un organe de répartition (230) s'étendant principalement selon une direction parallèle à cet axe transversal (T) en traversant chaque cheminée (133).

14. Colonne (1) selon la revendication précédente, dans laquelle l'au moins un organe de répartition (230) comprend une pluralité d'échancrures (231) par lesquelles la phase liquide est apte à rejoindre le dispositif de distribution (130), ces échancrures (231) étant ménagées entre les cheminées (133) du dispositif de distribution (130).

15. Colonne (1) selon l'une quelconque des revendications précédentes, dans laquelle le dispositif de séparation (200) comprend deux organes de répartition (230), ces deux organes de répartition (230) s'étendant selon deux directions parallèles entre elles.

16. Colonne selon l'une quelconque des revendications précédentes dans laquelle la partie du conduit (210) se trouvant dans la boîte de séparation (220,221) est horizontale et l'ouverture de l'extrémité (215,216) du conduit est en face de la paroi périphérique (100).

17. Ensemble de distillation **caractérisé en ce qu'**il comprend au moins une colonne (1) de séparation gaz/liquide selon l'une quelconque des revendications précédentes, cette colonne (1) étant contenue dans une enceinte isolée (300).

## Patentansprüche

1. Kolonne (1) zur Gas-Flüssigkeits-Trennung, welche sich hauptsächlich entlang einer vertikalen Achse (V) erstreckt und eine zylindrische Außenwand (100) umfasst, die einen inneren Raum begrenzt, in welchem wenigstens ein erstes Kontaktorgan (120), in welchem die Flüssigkeit und das Gas in Kontakt gebracht werden, und wenigstens eine Verteilungsvorrichtung (130), die dafür ausgelegt ist, die von dem ersten Kontaktorgan (120) stammende Flüssigkeit zu sammeln und sie in Richtung eines zweiten Kontaktorgans (140) zu verteilen, angeordnet sind, wobei wenigstens eine Trennvorrichtung (200) zur Trennung eines zweiphasigen Fluids in dem inneren Raum der Kolonne (1) zwischen dem ersten Kontaktorgan (120) und der Verteilungsvorrichtung (130) angeordnet ist, wobei wenigstens eine Einspritzöffnung (103) für das zweiphasige Fluid in der Außenwand (100) der Kolonne (1) ausgebildet ist, wobei diese Einspritzöffnung (103) dafür ausgelegt ist, das Einspritzen des zweiphasigen Fluids in den inneren Raum der Kolonne (1) zwischen dem ersten Kontaktorgan (120) und der Verteilungsvorrichtung (130) zu ermöglichen, wobei die Trennvorrichtung (200) wenigstens eine Leitung (210) umfasst, die wenigstens teilweise zwischen der Einspritzöffnung (103) zum Einspritzen des zweiphasigen Fluids in den inneren Raum der Kolonne (1) und wenigstens zwei Trennboxen (220, 221) angeordnet ist, wobei diese wenigstens zwei Trennboxen (220, 221) dafür ausgelegt sind, die Trennung der flüssigen und der gasförmigen Phase des zweiphasigen Fluids zu ermöglichen, und an die Außenwand angrenzen, und wobei die wenigstens eine Leitung (210) eine solche Länge hat, dass die Entfernung, die von dem zweiphasigen Fluid zwischen der Einspritzöffnung und der Trennbox (220, 221) zurückgelegt wird, wenigstens 80 % oder sogar wenigstens 90 % des Durchmessers der Kolonne beträgt,
**dadurch gekennzeichnet, dass** die wenigstens zwei Trennboxen jeweils von einer Umfangswand und einer vertikalen Wand (222), die eine Sehne des kreisförmigen Querschnitts der Kolonne bildet, und von wenigstens einer unteren horizontalen Wand (225), die zwischen einem unteren Ende der vertikalen Wand und der Umfangswand angeordnet ist, begrenzt werden, wobei die Leitung wenigstens drei Zweige (211, 213, 214) aufweist, von denen ein erster Zweig (211) die Einspritzöffnung (103) für das zweiphasige Fluid durchquert und ein zweiter und ein dritter Zweig (213, 214, 313, 314), die sich jeweils senkrecht zum ersten Zweig erstrecken, den ersten Zweig (214) mit jeweils einer der Trennboxen (220, 221) verbinden, wobei jeder der Zweige die vertikale Wand so durchquert, dass sich ein Ende (215, 216) der Leitung in der Trennbox befindet, wobei die Trennboxen (220, 221) oder Paare von Trennboxen (220; 221) einander diametral gegenüberliegen.

2. Kolonne (1) nach Anspruch 1, wobei die Leitung (210) der Trennvorrichtung (200) zwischen der Einspritzöffnung (103) für das zweiphasige Fluid und der wenigstens einen Trennbox (220, 221) einen konstanten Durchmesser aufweist.

3. Kolonne (1) nach einem der Ansprüche 1 bis 2, wobei wenigstens eine Trennbox (220, 221) wenigstens ein Loch (224), über welches die gasförmige Phase des zweiphasigen Fluids die betreffende Trennbox (220, 221) verlassen kann, und wenigstens eine Öffnung, über welche die flüssige Phase des zweiphasigen Fluids diese Trennbox (220, 221) verlassen kann, umfasst, wobei das wenigstens eine Loch (224) in der Nähe eines ersten vertikalen Endes der Trennbox (220, 221) ausgebildet ist und die Öffnung in der Nähe eines zweiten vertikalen Endes dieser Trennbox (220, 221), das dem ersten vertikalen Ende gegenüberliegt, ausgebildet ist.

4. Kolonne (1) nach dem vorhergehenden Anspruch, wobei das wenigstens eine Loch (224) oberhalb eines Verbindungsbereichs zwischen der Leitung (210) und der wenigstens einen Trennbox (220, 221) ausgebildet ist.

5. Kolonne (1) nach einem der Ansprüche 1 bis 4, wobei die wenigstens eine Trennbox (220, 221) von der Umfangswand, der vertikalen Wand (222) und wenigstens einer unteren horizontalen Wand (225), die zwischen einem unteren Ende der vertikalen Wand (222) und der Umfangswand angeordnet ist, begrenzt wird, wobei diese untere horizontale Wand (225) hauptsächlich in eine Ebene einbeschrieben ist, die zu einer Haupterstreckungsebene der vertikalen Wand (222) senkrecht ist, wobei die wenigstens eine Öffnung, über welche die flüssige Phase des zweiphasigen Fluids die betreffende Trennbox (220, 221) verlassen kann, in dieser unteren horizontalen Wand (225) ausgebildet ist.

6. Kolonne (1) nach dem vorhergehenden Anspruch, wobei ein Rohr (240) in einer Öffnung angeordnet ist, die in der unteren horizontalen Wand (225) der Trennbox (220, 221) ausgebildet ist, wobei das Rohr (240) ein oberes vertikales Ende (241) umfasst, welches sich in die betreffende Trennbox (220, 221) erstreckt, und das Rohr (240) dafür ausgelegt ist, von der flüssigen Phase des zweiphasigen Fluids durchströmt zu werden.

7. Kolonne (1) nach dem vorhergehenden Anspruch, wobei das obere vertikale Ende (241) des Rohres (240) abgeschrägt ist.

8. Kolonne (1) nach einem der Ansprüche 1 bis 7, wobei die Trennvorrichtung (200) wenigstens ein Verteilungsorgan (230) umfasst, das sich durch die Kolonne (1) hindurch entlang einer Querachse (T) erstreckt, die zu der vertikalen Achse (V) im Wesentlichen senkrecht ist, und wobei wenigstens ein Rohr (240) der Trennvorrichtung (200) ein unteres vertikales Ende umfasst, welches in das wenigstens eine Verteilungsorgan (230) mündet, wobei dieses Verteilungsorgan (230) dafür ausgelegt ist, die flüssige Phase des zweiphasigen Fluids auf einer gesamten Fläche der Verteilungsvorrichtung (130) zu verteilen.

9. Kolonne (1) nach dem vorhergehenden Anspruch in Verbindung mit einem der Ansprüche 4 oder 5, wobei sich das wenigstens eine Verteilungsorgan (230) zwischen den zwei Trennboxen (220, 221) erstreckt.

10. Kolonne (1) nach einem der Ansprüche 1 bis 9, wobei wenigstens eine Trennbox (220, 221, 320, 321) außerdem von einer oberen horizontalen Wand (223) begrenzt wird, die zwischen einem oberen Ende der vertikalen Wand (222) und der Umfangswand angeordnet ist.

11. Kolonne (1) nach dem vorhergehenden Anspruch, wobei sich die obere horizontale Wand (223) über die vertikale Wand (222) hinaus in Richtung des inneren Raumes der Kolonne (1) erstreckt.

12. Kolonne (1) nach einem der Ansprüche 1 bis 11, wobei wenigstens eine Trennbox (220, 221, 320, 321) ein mit der Außenwand (100) der Kolonne (1) fest verbundenes Ablenkorgan (250) umfasst, welches in die betreffende Trennbox (220, 221) mündet, wobei dieses Ablenkorgan (250) dafür ausgelegt ist, die flüssige Phase zu der wenigstens einen Öffnung hin zu lenken, die in der Nähe des zweiten vertikalen Endes dieser Trennbox (220, 221) ausgebildet ist.

13. Kolonne (1) nach einem der vorhergehenden Ansprüche, wobei die Verteilungsvorrichtung (130) wenigstens eine Lochplatte (131), über welche die Flüssigkeit die Verteilungsvorrichtung (130) verlassen kann, und mehrere Kamine (133), welche von dieser Lochplatte (131) ausgehen und welche dafür ausgelegt sind, von dem in der Kolonne (1) vorhandenen Gas durchströmt zu werden, umfasst, wobei die Kamine (133) hintereinander entlang der zu der vertikalen Achse (V) senkrechten Querachse (T) aufgereiht sind, wobei sich das wenigstens eine Verteilungsorgan (230) hauptsächlich in einer Richtung erstreckt, die zu dieser Querachse (T) parallel ist, und dabei jeden Kamin (133) durchquert.

14. Kolonne (1) nach dem vorhergehenden Anspruch, wobei das wenigstens eine Verteilungsorgan (230) mehrere Aussparungen (231) umfasst, über welche die flüssige Phase zur Verteilungsvorrichtung (130) gelangen kann, wobei diese Aussparungen (231) zwischen den Kaminen (133) der Verteilungsvorrichtung (130) ausgebildet sind.

15. Kolonne (1) nach einem der vorhergehenden Ansprüche, wobei die Trennvorrichtung (200) zwei Verteilungsorgane (230) umfasst, wobei sich diese zwei Verteilungsorgane (230) entlang zweier zueinander paralleler Richtungen erstrecken.

16. Kolonne nach einem der vorhergehenden Ansprüche, wobei der in der Trennbox (220, 221) befindliche Teil der Leitung (210) horizontal ist und die Öffnung des Endes (215, 216) der Leitung der Umfangswand (100) gegenüberliegt.

17. Destillationsanordnung, **dadurch gekennzeichnet, dass** sie wenigstens eine Kolonne (1) zur Gas-Flüssigkeits-Trennung nach einem der vorhergehenden Ansprüche umfasst, wobei diese Kolonne (1) in einer isolierten Umschließung (300) enthalten ist.

## Claims

1. Gas/liquid separation column (1) extending mainly along a vertical axis (V) and comprising a cylindrical external wall (100) delimiting an internal space in which are arranged at least one first contact member (120) in which the liquid and the gas are brought into contact, at least one dispensing device (130) configured to collect the liquid resulting from the first contact member (120) and to distribute it to a second contact member (140), at least one device (200) for separating a two-phase fluid arranged in the internal space of the column (1) between the first contact member (120) and the dispensing device (130), at least one orifice (103) for injecting the two-phase fluid being made in the external wall (100) of the column (1), this injection orifice (103) being configured to enable the injection of the two-phase fluid into the internal space of the column (1), between the first contact member (120) and the dispensing device (130), the separation device (200) comprising at least one duct (210) arranged, at least partially, between the orifice (103) for injecting the two-phase fluid into the internal space of the column (1) and at least two separation boxes (220, 221), these at least two separation boxes (220, 221) being configured to enable the separation of the liquid and gaseous phases of the two-phase fluid and being contiguous with the external wall and the at least one duct (210) having a length such that the distance travelled by the two-phase fluid between the injection orifice and the separation box (220, 221) is at least equal to 80%, or even at least equal to 90%, of the diameter of the column, **characterized in that** the at least two separation boxes are each delimited by a peripheral wall and a vertical wall (222), forming a chord of the circular cross section of the column, and by at least one lower horizontal wall (225) arranged between a lower end of the vertical wall and the peripheral wall, the duct having at least three branches (211, 213, 214) among which a first branch (211) passes through the orifice (103) for injecting the two-phase fluid and a second branch and a third branch (213, 214, 313, 314), each extending perpendicularly to the first branch, respectively connect the first branch (214) to one of the separation boxes (220, 221), each of the branches passing through the vertical wall so that an end (215, 216) of the duct is found in the separation box, the separation boxes (220, 221) or pairs of separation boxes (220; 221) being diametrically opposite.

2. Column (1) according to Claim 1, in which the duct (210) of the separation device (200) has a constant diameter between the orifice (103) for injecting the two-phase fluid and the at least one separation box (220, 221) .

3. Column (1) according to either one of Claims 1 and 2, in which at least one separation box (220, 221) comprises at least one hole (224) through which the gas phase of the two-phase fluid is capable of leaving the relevant separation box (220, 221) and at least one aperture through which the liquid phase of the two-phase fluid is capable of leaving this separation box (220, 221), the at least one hole (224) being made in the vicinity of a first vertical end of the separation box (220, 221) and the aperture being made in the vicinity of a second vertical end of this separation box (220, 221), opposite the first vertical end.

4. Column (1) according to the preceding claim, in which the at least one hole (224) is made above a joining zone between the duct (210) and the at least one separation box (220, 221).

5. Column (1) according to any one of Claims 1 to 4, in which the at least one separation box (220, 221) is delimited by the peripheral wall, the vertical wall (222) and at least one lower horizontal wall (225) arranged between a lower end of the vertical wall (222) and the peripheral wall, this lower horizontal wall (225) mainly being inscribed within a plane perpendicular to a main extension plane of the vertical wall (222), the at least one aperture through which the liquid phase of the two-phase fluid is capable of leaving the relevant separation box (220, 221) being made in this lower horizontal wall (225) .

6. Column (1) according to the preceding claim, in which a pipe (240) is arranged in an aperture made in the lower horizontal wall (225) of the separation box (220, 221), the pipe (240) comprising an upper vertical end (241) which extends into the relevant separation box (220, 221), and the pipe (240) being configured to be passed through by the liquid phase of the two-phase fluid.

7. Column (1) according to the preceding claim, in which the upper vertical end (241) of the pipe (240) is bevelled.

8. Column (1) according to any one of Claims 1 to 7, in which the separation device (200) comprises at least one distribution member (230) extending across the column (1) along a transverse axis (T) substantially perpendicular to the vertical axis (V), and in which at least one pipe (240) of the separation device (200) comprises a lower vertical end which opens into the at least one distribution member (230), this distribution member (230) being configured to distribute the liquid phase of the two-phase fluid over an entire surface of the dispensing device (130).

9. Column (1) according to the preceding claim, combined with either of Claims 4 and 5, in which the at least one distribution member (230) extends between the two separation boxes (220, 221).

10. Column (1) according to any one of Claims 1 to 9, in which at least one separation box (220, 221, 320, 321) is further delimited by an upper horizontal wall (223) arranged between an upper end of the vertical wall (222) and the peripheral wall.

11. Column (1) according to the preceding claim, in which the upper horizontal wall (223) extends beyond the vertical wall (222) in the direction of the internal space of the column (1).

12. Column (1) according to any one of Claims 1 to 11, in which at least one separation box (220, 221, 320, 321) comprises a by-pass member (250) firmly attached to the external wall (100) of the column (1) which opens into the relevant separation box (220, 221), this by-pass member (250) being configured to send the liquid phase to the at least one aperture made in the vicinity of the second vertical end of said separation box (220, 221).

13. Column (1) according to any one of the preceding claims, in which the dispensing device (130) comprises at least one perforated plate (131) through which the liquid is capable of leaving the dispensing device (130), a plurality of stacks (133) which emerge from this perforated plate (131) and which are configured to be passed through by the gas present in the column (1), the stacks (133) being stacked one after the other along the transverse axis (T) perpendicular to the vertical axis (V), the at least one distribution member (230) extending mainly along a direction parallel to this transverse axis (T) passing through each stack (133).

14. Column (1) according to the preceding claim, in which the at least one distribution member (230) comprises a plurality of notches (231) through which the liquid phase is capable of reaching the dispensing device (130), these notches (231) being made between the stacks (133) of the dispensing device (130).

15. Column (1) according to any one of the preceding claims, in which the separation device (200) comprises two distribution members (230), these two distribution members (230) extending along two mutually parallel directions.

16. Column according to any one of the preceding claims, in which the portion of the duct (210) that is in the separation box (220, 221) is horizontal and the opening of the end (215, 216) of the duct is facing the peripheral wall (100).

17. Distillation assembly **characterized in that** it comprises at least one gas/liquid separation column (1) according to any one of the preceding claims, this column (1) being contained in an insulated chamber (300).
